# EUROPÄISCHE PATENTSCHRIFT

(11) **EP 3 831 899 B1**
(45) Veröffentlichungstag und Bekanntmachung des Hinweises auf die Patenterteilung: **08.02.2023**
(21) Anmeldenummer: 19213056.5
(22) Anmeldetag: 03.12.2019
(51) Int. Cl.: C09D 167/08

(54) **LÖSEMITTELHALTIGE BESCHICHTUNGSMASSE, INSBESONDERE LÖSEMITTELHALTIGER BAUTENLACK, BESCHICHTUNG ERHALTEN AUS DER BESCHICHTUNGSMASSE SOWIE DIE VERWENDUNG DER BESCHICHTUNGSMASSE**
SOLVENT-CONTAINING COATING MATERIAL, ESPECIALLY A SOLVENT-CONTAINING STRUCTURE COATING, COATING OBTAINED FROM SAID COATING MATERIAL AND THE USE OF SAID COATING MATERIAL
MATIÈRE DE REVÊTEMENT CONTENANT DU SOLVANT, EN PARTICULIER LAQUE POUR CONSTRUCTIONS CONTENANT DU SOLVANT, REVÊTEMENT OBTENU À PARTIR DE LA MATIÈRE DE REVÊTEMENT AINSI QU'UTILISATION DE LA MATIÈRE DE REVÊTEMENT

(43) Veröffentlichungstag der Anmeldung: 09.06.2021
(73) Patentinhaber: DAW SE, 64372 Ober-Ramstadt (DE)
(72) Erfinder: HERMANN, Beatrix, 64291 Darmstadt (DE)
(74) Vertreter: Metten, Karl-Heinz

(56) Entgegenhaltungen:
- EP-A1- 0 234 641
- DE-T2- 60 302 334
- GB-A- 2 294 938

## Beschreibung

Die vorliegende Erfindung betrifft eine lösemittelhaltige Beschichtungsmasse für Lackbeschichtungen, insbesondere einen lösemittelhaltigen Bautenlack. Ferner betrifft die Erfindung eine Beschichtung auf einem Substrat. Außerdem betrifft die Erfindung die Verwendung der Beschichtungsmasse.

Lackbeschichtungen für Außenanwendungen, beispielsweise auf Metall- oder Holzsubstraten, sind regelmäßig vielfältigen, mitunter sehr harschen Witterungsbedingungen ausgesetzt. Derartige Beschichtungen haben dabei mechanischen Einflüssen ebenso unbeschadet zu widerstehen wie Beeinträchtigungen durch Feuchtigkeit und UV-Strahlung, und zwar ohne Einbußen bei dem gewünschten, ursprünglich vorliegenden optischen Erscheinungsbild in Kauf nehmen zu müssen, auch nicht über einen längeren Nutzungszeitraum. Darüber hinaus wird nicht selten gefordert, dass sich die diese Beschichtungen liefernden Beschichtungsmassen einfach und unproblematisch applizieren lassen und zudem zügig unter Ausbildung einer glatten, hochwertigen Oberfläche abtrocknen. Um einen dauerhaften, guten Schutz zu bekommen, tendiert man daher häufig dahin, die Beschichtungsmasse relativ dick aufzutragen. Dies ist gleichermaßen material-, arbeits- und kostenintensiv. Das Trocknen solcher lösemittelhaltigen Beschichtungsmassen beruht hierbei regelmäßig auf physikalischen und chemischen Trocknungs- bzw. Aushärtungsprozessen. Die Trocknungsprozesse haben in einer Weise vonstatten zu gehen, dass die erhaltenen Beschichtungen weder zu weich noch zu hart geraten. In letzterem Fall erhält man spröde Lackbeschichtungen, die sehr leicht abblättern. Zwecks Initiierung und Forcierung der chemischen, oxidativen Trocknung vermittels Luftsauerstoff setzt man häufig organische Kobaltsalze als sogenannte Primärtrockner zu. Angesichts immer strenger werdender gesetzlicher Vorgaben stellt sich die Frage, ob derartige Kobalt-basierte Trockner zukünftig in lösemittelhaltigen Beschichtungsmassen noch verwendet werden können. Allerdings werden bei Verwendung alternativer Primärtrockner zumeist weniger zufriedenstellende Resultate erzielt.

Darüber hinaus trachtet man verstärkt nach Maler- und Bautenlacken mit einem hohen Festkörperanteil. Auf diese Weise könnte man die Lösemittelemission verringern. Derartige Maler- und Bautenlacken sind daher aufgrund der damit im Allgemeinen einhergehenden verringerten Geruchsbelästigung besonders gut für Anwendungen im Innenbereich geeignet. Hohe Festkörperanteile in Bautenlacken lassen sich jedoch nicht selten nur sehr schwierig applizieren. Ferner führt deren Verwendung bislang zu langen Trocknungszeiten, der Bildung von Runzeln, einer ausgeprägten Vergilbungstendenz sowie zu einer schlechten Durchtrocknung.

Gemäß der EP 360 188 A2 sollen geeignete festkörperreiche, schnelltrocknende Maler- und Bautenlacke durch Verwendung eines niedrigviskosen, lufttrocknenden Bindemittels zugänglich sein. Dieses Bindemittel soll dabei gebildet durch Reaktion von 25 bis 50 Gew.-% eines Fettsäure-Pfropfcopolymerisats aus 20 bis 60 Gew.-% an trocknenden Fettsäuren mit einer Jodzahl von über 130 und mit überwiegend isolierten Doppelbindungen und 30 bis 70 Gew.-% einer Mischung von Vinyl- und/oder (Meth)acryl-Monomeren, die außer der C-C-Doppelbindung keine weiteren funktionellen Gruppen tragen, mit 30 bis 60 Gew.-% an trocknenden Fettsäuren mit einer Jodzahl von über 130 und 5 bis 25 Gew.-% an Polyolen mit 3 bis 6 Hydroxylgruppen pro Molekül. Es soll über eine Grenzviskositätszahl (gemessen in Chloroform bei 20 °C) von 5,3 bis 9,0 ml x g, verfügen.

In der EP 1 696 010 A1 werden festkörperreiche Lackzusammensetzungen auf Alkydharz-Basis beschrieben enthaltend 25 bis 65 Gew.-% eines festen Alkydharzes, 0 bis 40 Gew.-% an Pigmenten und/oder Füllstoffen, 0,5 bis 5 Gew.-% an einem Trocknungsmittel, 10 bis 30 Gew.-% an Lösungsmittel, e) 5 bis 25 Gew.-% Wasser und f) 0 bis 25 Gew.-% weitere Zusatzstoffe. Diese Lackzusammensetzungen sollen einen Gehalt an flüchtigen organischen Verbindungen (VOC) von maximal 300 g/L aufweisen und zudem nicht schwierig zu verarbeiten sein.

Die EP 0 234 641 A1 betrifft eine Beschichtungszusammensetzung mit einem Feststoffgehalt von mindestens 80 Gew.-%, bezogen auf ein oxidativ trocknendes Bindemittel, ein Sikkativ und ein organisches Lösungsmittel mit einem Flammpunkt von mindestens 55 °C, wobei das oxidativ trocknende Bindemittel ein Alkydharz zu sein hat. Dieses Alkydharz wird dabei gebildet aus einerseits 30 bis 85 Mol-% einer ethylenisch ungesättigten Monocarbonsäure mit 6 bis 24 Kohlenstoffatomen und 15 bis 70 Mol-% einer Polycarbonsäure mit 4 bis 36 Kohlenstoffatomen und andererseits aus 10 bis 80 Mol-% einer Hydroxyl- und/oder Epoxyverbindung mit einer Allylethergruppe und 20 bis 90 Mol-% einer mindestens dreiwertigen Hydroxylverbindung mit 3 bis 24 Kohlenstoffatomen. Das Alkydharz hat darüber hinaus ein zahlenmittleres Molekulargewicht von 1400 bis 2800, eine Säurezahl von 0 bis 30, eine Hydroxylzahl von 0 bis 80 und einen Löslichkeitsparameter von 8,5 bis 11,0 aufzuweisen, und das organische Lösungsmittel einen hat über einen Siedepunkt im Bereich von 140° bis 260°C zu verfügen. Mit diesen Beschichtungszusammensetzungen soll es möglich sein, auf organische Lösungsmittels mit einem Flammpunkt von mindestens 55°C zurückgreifen zu können.

Die GB 2 294 938 A stellt ab auf eine Beschichtungszusammensetzung, umfassend ein lufttrocknendes Alkyd- oder modifiziertes Alkydharz und ein reaktives Verdünnungsmittel als Bindemittelkomponente sowie eine flüchtige organische Lösungsmittelkomponente. Das Alkyd und das reaktive Verdünnungsmittel haben in der flüchtigen organischen Lösungsmittelkomponente gelöst vorzuliegen, und zwar in einer Menge von nicht mehr als 250 g/l, bezogen auf die Gesamtzusammensetzung, wobei gegebenenfalls auch eine Farbmittelkomponente, umfassend ein oder mehrere Pigmente, zugegen sein kann. Mit diesen autoxidierbare Bindemittel enthaltenden Beschichtungszusammensetzungen soll es möglich sein, zu lösungsmittelhaltigen dekorativen Glanzlacken zu gelangen, die weniger als 250 g/l aromatenund geruchsarme flüchtige organische Lösungsmittel enthalten.

Die DE 603 02 334 T2 betrifft die Verwendung eines Fettsäure-modifizierten Kohlenhydrats, erhältlich durch Reaktion eines Kohlenhydrats oder eines Acylesters eines Kohlenhydrats mit einer Fettsäure, einem Alkylester einer Fettsäure oder einem Fettsäure-Derivat, als reaktionsfähiges Verdünnungsmittel in einer Beschichtungszusammensetzung. Die derart ausgestatteten Beschichtungszusammensetzungen sollen bei gesteigertem Feststoffanteil über Trocknungscharakteristika und Filmbildungseigenschaften verfügen, die auf derselben Stufe stehen wie die konventioneller Alkydfarben.

Der bekannte Stand der Technik lässt noch stets Wünsche offen. Der vorliegenden Erfindung lag die Aufgabe zugrunde, Lacke mit einem hohen Festkörperanteil zur Verfügung zu stellen, die bzw. deren Herstellung nicht mit den Nachteilen des Stands der Technik behaftet sind und die gleichwohl ein Eigenschaftsprofil wie herkömmliche lösemittelhaltige Lacke aufweisen, beispielsweise hinsichtlich Verarbeitung, Trocknung, Optik und/oder Qualität.

Demgemäß wurde eine lösemittelhaltige Beschichtungsmasse für Lackbeschichtungen, insbesondere ein lösemittelhaltiger Bautenlack, gefunden bestehend aus oder enthaltend
a) 35 bis 65 Gew.-%, bevorzugt 55 bis 60 Gew.-%, eines ersten, insbesondere bei Raumtemperatur, oxidativ trocknenden langöligen Alkydharzes,
b) mindestens ein Lösungsmittels,
c) gegebenenfalls Additive,
wobei der Festkörperanteil der Beschichtungsmasse, bezogen auf das Gesamtgewicht der Beschichtungsmasse, oberhalb von 90,0 Gew.-%, bevorzugt im Bereich von oberhalb 90,0 bis 98,0 Gew.-% und besonders bevorzugt im Bereich von 95,0 bis 98,0 Gew.-% liegt, und wobei die die Beschichtungsmasse bildenden Komponenten sich stets zu 100,00 Gew.-% addieren.

Dabei verfügt das erste oxidativ trocknende langölige Alkydharz vorzugsweise über eine Säurezahl, die nicht oberhalb von 10 mg KOH/g Polymer, bevorzugt nicht oberhalb von 9 mg KOH/g Polymer und besonders bevorzugt nicht oberhalb von 8 mg KOH/g Polymer, jeweils bestimmt gemäß DIN EN ISO 2114:2002-06, liegt.

Das erste oxidativ trocknende langölige Alkydharz weist ferner bevorzugt eine Viskosität im Bereich von 700 bis 1100 mPas, ermittelt bei 23°C und einer Scherrate von 250 s⁻¹, auf.

Des Weiteren ist das erste oxidativ trocknende langölige Alkydharz in einer bevorzugten Ausführungsform gekennzeichnet durch einen Ölgehalt größer 60 %, bevorzugt von mindestens 70 %, besonders bevorzugt von mindestens 75 % und insbesondere im Bereich von 76 bis 84 %.

Unter Ölgehalt des Alkydharzes nach DIN EN ISO 4617 versteht man - unabhängig davon, ob Öle oder ungesättigte Fettsäuren einkondensiert wurden - den Gehalt an Fettsäureresten, berechnet als Triglycerid, bezogen auf den nichtflüchtigen Anteil des Alkydharzes, wobei die Prozentangaben Gewichtsprozente bedeuten.

Der nicht-flüchtige Anteil (bestimmt bei Raumtemperatur, d.h. bei 20 °C) des langöligen Alkydharzes gemäß Komponente a) liegt bevorzugt oberhalb von 30,0 Gew.-%, bevorzugt im Bereich von 30,0 bis 70,0 Gew.-% und besonders bevorzugt im Bereich von 40,0 bis 65,0 Gew. %, jeweils bezogen auf das Gesamtgewicht der Komponente a).

Die erfindungsgemäßen Beschichtungsmassen umfassen in besonders zweckmäßigen Ausgestaltungen ferner einen zweiten, insbesondere bei Raumtemperatur, oxidativ trocknenden langöligen Alkydharz, der sich von dem ersten Alkydharz unterscheidet.

Dieser zweite oxidativ trocknende langölige Alkydharz liegt in der erfindungsgemäßen Beschichtungsmasse bevorzugt in einer Menge im Bereich bis maximal 15 Gew.-%, besonders bevorzugt bis maximal 12 Gew.-% und insbesondere in einer Menge im Bereich von 3 bis 10 Gew.-%, vor.

Besonders zweckmäßig verfügt das zweite oxidativ trocknende langölige Alkydharz über eine Säurezahl, die nicht oberhalb von 10 mg KOH/g Polymer, bevorzugt nicht oberhalb von 9 mg KOH/g Polymer und besonders bevorzugt nicht oberhalb von 8 mg KOH/g Polymer, jeweils bestimmt gemäß DIN EN ISO 2114:2002-06, liegt.

Die Viskosität des zweiten oxidativ trocknenden langöligen Alkydharzes liegt bevorzugt nicht oberhalb von 750 mPas, besonders bevorzugt nicht oberhalb von 600 mPas und insbesondere von 300 bis 550 mPas, ermittelt bei 23°C und einer Scherrate von 250 s⁻¹.

Des Weiteren kann in bevorzugten Ausgestaltungen vorgesehen sein, dass das zweite oxidativ trocknende langöligen Alkydharz über einen Ölgehalt von mindestens 80 %, bevorzugt mindestens 85 % und besonders bevorzugt im Bereich von 86 bis 94 %, verfügt.

Für den Langölanteil der ersten und/oder zweiten oxidativ trocknenden langöligen Alkydharze kann z.B. auf Linolsäure, Linolensäure und/oder Ölsäure, gegebenenfalls unter Zusatz von Palmitinsäure und/oder Stearinsäure, gegebenenfalls besonders zweckmäßig auf Linolsäure, Linolensäure und Ölsäure unter Zusatz von Palmitinsäure und Stearinsäure, zurükgegriffen. In einer zweckmäßigen Ausführungsform liegt der Langölanteil des zweiten oxidativ trocknenden langöligen Alkydharzes in den erfindungsgemäßen Beschichtungsmassen in Form von Linolsäure, Linolensäure, Ölsäure, Palmitinsäure oder Stearinsäure vor.

In den erfindungsgemäßen Beschichtungsmassen liegt der Festkörperanteil der ersten und/oder zweiten oxidativ trocknenden langöligen Alkydharze, insbesondere der ersten und zweiten oxidativ trocknenden langöligen Alkydharze, nicht unterhalb von 75 Gewichtsprozent, bevorzugt nicht unterhalb von 90 Gewichtsprozent und besonders bevorzugt nicht unterhalb von 98 Gewichtsprozent, vor.

Der nicht-flüchtige Anteil (bestimmt bei Raumtemperatur, d.h. bei 20 °C) der erfindungsgemäßen Beschichtungsmasse liegt bevorzugt oberhalb von 90,0 Gew.-%, bevorzugt im Bereich von oberhalb 90,0 bis 99,0 Gew.-% und besonders bevorzugt im Bereich von 95,0 bis 98,5 Gew.%, jeweils bezogen auf das Gesamtgewicht der Beschichtungsmasse.

Die ersten und/oder zweiten oxidativ trocknenden langöligen Alkydharze stellen oxidativ trocknende organische Bindemittel im Sinne der Erfindung dar.

Ferner zeichnen sich die erfindungsgemäßen Beschichtungsmassen vorteilhafter Weise dadurch aus, dass sie über einen VOC-Wert von maximal 275 g/L, bevorzugt von maximal 150 g/L, besonders bevorzugt von maximal 75 g/L, ferner bevorzugt von maximal 50 g/L und insbesondere von maximal 30 g/L verfügen, jeweils bestimmt gemäß DIN EN ISO 11890-1 (in der Fassung von September 2007).

Besonders geeignete erfindungsgemäße Beschichtungsmassen umfassen ferner
d) mindestens einen Primärtrockner, insbesondere basierend auf Eisen,
e) mindestens einen Sekundärtrockner,
f) mindestens ein Hautverhinderungsmittel und/oder
g) mindestens ein Rheologiemodifizierungsmittel sowie gegebenenfalls auch
h) mindestens ein Pigment und/oder Füllstoff und/oder
i) mindestens ein Netz- und/oder Dispergiermittel.

Die in den erfindungsgemäßen Beschichtungsmassen verwendeten Füllstoffe verfügen bevorzugt über eine Ölzahl, gemäß DIN EN ISO 787-5:1995, im Bereich von 10 bis 30, vorzugsweise im Bereich von 11 bis 25 und besonders bevorzugt im Bereich von 12 bis 17. Bei der Bestimmung Ölzahl gemäß ISO 787, Teil 5 (1995), wird regelmäßig der Bedarf an Leinöl bestimmt, der zur vollständigen Benetzung des Pigments bzw. Füllstoffes erforderlich ist.

Dabei können geeignete Füllstoffe ausgewählt werden aus der Gruppe bestehend aus Calciumcarbonat, z.B. gefälltes Calciumcarbonat (auch synthetisches Calciumcarbonat genannt) und/oder natürliches Calciumcarbonat, insbesondere natürliches Calciumcarbonat, Dolomit, Silikaten, insbesondere Schichtsilikaten ausgewählt aus der Gruppe bestehend aus Talkum, insbesondere plättchenförmigem Talkum, Glimmer, vorzugsweise mikronisiertem Glimmer, Feldspat, Pyrophyllit, Serpentin, Kaolinit und deren Mischungen, Bariumsulfat, z.B. synthetisches Bariumsulfat und/oder natürliches Bariumsulfat, insbesondere synthetisches Bariumsulfat, und einer beliebigen Mischung hiervon. Besonders bevorzugte Füllstoffe umfassen Dolomit, Talkum, synthetisches Bariumsulfat, mikronisierten Glimmer sowie beliebige Mischungen der vorangehend genannten Füllstoffe.

Dolomit ist im Allgemeinen in einer Menge im Bereich von 1 bis 30 Gew. % und bevorzugt im Bereich von 2 bis 22 Gew. %, jeweils bezogen auf das Gesamtgewicht der Beschichtungsmasse, zugegen. Die Ölzahl der bevorzugten Dolomitspezifikation liegt üblicherweise im Bereich von 10 bis 25 und bevorzugt im Bereich von 12 bis 20. Talkum kann beispielsweise in einer Menge bis zu 20 Gew. % und vorzugsweise in einer Menge bis zu 16 Gew. %, jeweils bezogen auf das Gesamtgewicht der erfindungsgemäßen Beschichtungsmasse, in derselben vorliegen. Synthetisches Bariumsulfat kann in Mengen von o bis 15 Gew. % und vorzugsweise im Bereich von 1 bis 12 Gew. % den erfindungsgemäßen Beschichtungsmassen zugegeben werden, jeweils bezogen auf das Gesamtgewicht der Beschichtungsmasse. Die Ölzahl von bevorzugtem synthetischen Bariumsulfat liegt üblicherweise im Bereich von 10 bis 20 und vorzugsweise im Bereich von 12 bis 17. Mikronisierter Glimmer kann in den erfindungsgemäßen Beschichtungsmassen in Mengen von 0 bis 10 Gew. % und bevorzugt in Mengen im Bereich von 1 bis 7 Gew. %, jeweils bezogen auf das Gesamtgewicht der Beschichtungsmasse, zugesetzt werden. In bevorzugten Ausgestaltungen verfügt der mikronisierte Glimmer über eine Ölzahl im Bereich von 30 bis 6o, vorzugsweise im Bereich von 40 bis 55.

Für den Fall, dass bei den erfindungsgemäßen Beschichtungsmassen Pigmente, insbesondere Titandioxid, verwendet werden, können diese zweckmäßigerweise eine Ölzahl, bestimmt gemäß DIN EN ISO 787-5:1995, im Bereich von 12 bis 20, bevorzugt im Bereich von 13 bis 18 und besonders bevorzugt im Bereich von 14 bis 17, aufweisen. Es hat sich für diejenigen Ausführungsformen der erfindungsgemäßen Beschichtungsmasse, die Füllstoffe und/oder Pigmente enthalten, als vorteilhaft erwiesen, auf solche Füllstoff und/oder Pigmente zurückzugreifen, die über eine geringe Ölzahl verfügen. Selbst verständlich umfassen die erfindungsgemäßen Beschichtungsmasse auch solche Ausführungsvariante, die keine Füllstoffe und/oder keine Pigmente, zum Beispiel keine Füllstoffe und keine Pigmente, enthalten.

Unter den Weißpigmenten ist Titandioxid bevorzugt. Als geeignete Pigmente kommen neben den Weißpigmenten oder alternativ auch Bundpigmente in Betracht. Pigmente werden häufig in Mengen von 1 bis 30 Gew.-% und vorzugsweise im Bereich von 2 bis 20 Gew.-%, jeweils bezogen auf das Gesamtgewicht der Beschichtungsmasse, eingesetzt.

Kommt in den erfindungsgemäßen Beschichtungsmassen ein Primärtrockner zum Einsatz, handelt es sich hierbei bevorzugt um ein organisches Salz des Eisens und/oder Mangans und/oder eine Komplexverbindung des Eisens und/oder eine Komplexverbindung des Mangans. Geeignete Komplexverbindungen des Eisens und/oder Mangans, insbesondere Komplexsalze, basieren z.B. auf 3,7-Diaza-bicyclo[3.3.1]nonan-Liganden. Exemplarisch sei als besonders geeignet Eisen(2+)-chloro(dimethyl-9,9-dihydroxy-3-methyl-2,4-di-(2-pyridyl)-7-(pyridin-2-ylmethyl)-3,7-diazabicyclo[3.3.1]nonan-1,5-dicarboxylat)-chlorid genannt. Dessen Herstellung findet sich z.B. in der WO 2011095308 A1 offenbart. Geeignete organische Salze des Eisens und geeignete organische Salze des Mangans umfassen auch Metallseifen des Eisens bzw. des Mangans. Hierbei stellen bevorzugte Metallseifen Salze auf der Basis von kationischen Eisen- bzw. Manganspezies und Fettsäuren, insbesondere synthetischen Fettsäuren, dar. Exemplarisch seien unter den geeigneten Fettsäuren Hydroxystearate, Behenate, Arachinate, Palmitate und Laurate genannt.

Des Weiteren hat es sich als vorteilhaft herausgestellt, der erfindungsgemäßen Beschichtungsmasse zusätzlich solche Komplexliganden zuzusetzen, die mit der Eisenspezies der organischen Eisensalze und/oder mit den Eisenspezies der Eisen-Komplexverbindungen, insbesondere der Eisenspezies der Eisen-Komplexverbindungen, gemäß dem Primärtrockner eine koordinative Bindung eingehen können (Komponente g)). Entsprechend kann vorgesehen sein, der erfindungsgemäßen Beschichtungsmasse zusätzlich solche Komplexliganden zuzusetzen, die mit der Manganspezies der organischen Mangansalze und/oder mit den Manganspezies der Mangan-Komplexverbindungen, insbesondere der Manganspezies der Mangan-Komplexverbindungen, gemäß dem zweiten Primärtrockner eine koordinative Bindung eingehen können (Komponente h)). Durch die Zugabe der genannten Komplexliganden kann die Trocknungsstabilität der erfindungsgemäßen Beschichtungsmassen nochmals verbessert werden. Besonders geeignet sind hierbei solche Eisen- oder Mangan-Komplexliganden, d.h. Liganden, die Eisen- und/oder Manganspezies komplexieren können, die ausgewählt sind aus mindestens einem mono-, di-, tri-, tetra-, penta- und/oder hexadentaten Stickstoffdonorliganden. Hierbei kann es sich z.B. um stickstoffhaltige Lewis-Basen handeln. Solche geeigneten Komplexliganden sind z.B. der WO 2012/079624 A1 zu entnehmen.

Und wird in den erfindungsgemäßen Beschichtungsmassen ein Sekundärtrockner eingesetzt, greifbar hierfür bevorzugt auf ein organisches Salz des Zirkoniums, Strontiums, Lithiums und/oder Aluminiums, insbesondere ein organischen Salz des Zirkoniums und/oder Strontiums, und/oder ein organisches Salz des Calciums zurück. Dabei kann in einer besonders geeigneten Ausgestaltung vorgesehen sein, dass das organische Salz des Sekundärtrockners Neodecanoate, Oleate, Stearate, Palmitate und/oder Naphthenate, insbesondere Neodecanoate, umfasst, besonders bevorzugt Zirkonium- und/oder Strontiumneodecanoate.

Derartige erfindungsgemäße Beschichtungsmassen sind besonders bevorzugt, die im Wesentlichen frei von Primärtrockner und Sekundärtrocknern auf Cobalt-, Barium- und/oder Blei-Basis oder die im Wesentlichen frei von Primärtrockner und Sekundärtrocknern auf Cobalt-, Barium- und Blei-Basis sind. Für viele Anwendungen hat es sich bereits als vorteilhaft erwiesen, wenn die erfindungsgemäßen Beschichtungsmassen im Wesentlichen frei von Primärtrocknern und Sekundärtrocknern auf Cobalt-Basis sind. Als im Wesentlichen frei von Primärtrocknern auf Kobaltbasis soll im Sinne der Erfindung im Einklang mit der Norm EN 71, Teil 3, eine solche Beschichtungsmasse verstanden werden, die nicht mehr als 2,6 ppm (mg/kg) an Kobalt enthält. Als im Wesentlichen frei von Sekundärtrocknern auf Blei-Basis soll im Sinne der Erfindung im Einklang mit der Norm EN 71, Teil 3, eine solche Beschichtungsmasse verstanden werden, die nicht mehr als 3,4 ppm (mg/kg) an Blei enthält. Besonders bevorzugt sind dabei solche erfindungsgemäßen Beschichtungsmassen, die vollständig frei von Primärtrocknern auf Kobaltbasis und/oder von Sekundärtrocknern auf Blei-Basis sind, wobei solche Beschichtungsmassen hervorzuheben sind, die sowohl vollständig frei von Primartrocknern auf Kobaltbasis wie auch vollständig frei von Sekundärtrocknern auf Blei-Basis sind. Vollständig frei soll bedeuten, dass die Mengen an Kobalt und Blei derart gering sind, dass sie unterhalb der Nachweisgrenze gegenwärtig gängiger Analysetechniken liegen.

Die der Erfindung zugrunde liegende Aufgabe wird mit solchen erfindungsgemäßen Beschichtungsmasse besonders zufriedenstellend gelöst, bei denen das Netz- und/oder Dispergiermittel i) ausgewählt ist aus der Gruppe bestehend aus einem verzweigkettigen Polyester i1), einem Polyesterblockcopolymer i2), vorzugsweise mit einer Molmasse Mw im Bereich von 60.000 bis 100.000 g/mol, einem polymeren Alkylammoniumsalz i3), einem Polyphosphorsäureester i4) und beliebigen Mischungen hiervon. Durch die Verwendung von Netzmitteln, insbesondere der vorangehend genannten Netzmittel, kann, ohne an eine Theorie gebunden zu sein, möglicherweise im Wechselspiel mit dem bzw. den oxidativ trocknenden organischen Bindemitteln, die Viskosität der Beschichtungsmassen, obwohl diese einen hohen Feststoffanteil enthalten, nochmals reduziert werden, wodurch man zu sehr anwendungsfreundlichen pastösen Systemen gelangt.

Dabei kann zusätzlich oder alternativ auf ein Rheologiemodifizierungsmittel g) zurückgegriffen werden, das ausgewählt ist aus der Gruppe bestehend aus thioxotropen Alkydharzen, Schichtsilikaten, beispielsweise Bentoniten und/oder modifizierten Schichtsilikaten, wobei organisch modifizierte Schichtsilikate bevorzugt sind, und beliebigen Mischungen hiervon. Modifizierte sowie insbesondere organisch modifizierte Schichtsilikate können beispielsweise durch Vermischen von quartären Ammoniumsalzen mit einem Ton, beispielsweise Smektiten, Montmorilloniten, Bentoniten und/oder Sepioliten erhalten werden. Hierbei entstehen regelmäßig sogenannte exfolierte Schichtsilikatsysteme. Die quartären Ammoniumsalze verfügen im Allgemeinen über mindestens einen, vorzugsweise mindestens zwei oder genau zwei langkettige gesättigte oder Doppelbindungen enthaltende Kohlenwasserstoffreste, beispielsweise eine lineare oder verzweigte, insbesondere lineare, Alkyl- oder Alkylenkette. Exemplarisch seien langkettige Kohlenwasserstoffreste auf Basis natürlicher Fettsäuren wie Ölsäure, Linolsäure, Palmitinsäure, Stearinsäure und/oder Myristinsäure genannt. Beispielsweise seien als geeignete modifizierte Schichtsilikate Quaternium-90 Sepiolite und Quaternium-go Montmorillonite genannt. Beispielsweise können auch beliebige Mischungen an solchen langkettigen Kohlenwasserstoffresten eingesetzt werden, beispielsweise auf Basis des Palmöls oder Talgs. Bevorzugt wird auf solche modifizierten Schichtsilikate auf Basis von Sepioliten und Montmorilloniten zurückgegriffen. Für die Herstellung geeigneter modifizierter Schichtsilikate sei exemplarisch auf die WO 97/30950 verwiesen.

Liegt in den erfindungsgemäßen Beschichtungsmasse das Hautverhinderungsmittel f) vor, ist dieses vorzugsweise ausgewählt aus der Gruppe bestehend aus substituierten Phenolen, Dialkylaminoethanol, insbesondere Dimethylaminoethanol und/oder Diethylaminoethanol, Dialkylhydroxylamin, insbesondere Dimethylhydroxylamin und/oder Diethylhydroxylamin, Dibenzylhydroxylamin, Hydroxylamin, Diethylamin, Triethylamin, Ketoximen, insbesondere Acetonoxim, Butanonoxim und/oder Pentanonoxim, und beliebigen Mischungen hiervon. Hierbei sind insbesondere solche Hautverhinderungsmittel bevorzugt, die über eine Verdunstungszahl (VD) nach DIN 53170 (bei 20°C und 65 ±5 % relativer Luftfeuchtigkeit mit Diethylether als Bezugsstoffs) größer 200, bevorzugt größer 500 und besonders bevorzugt größer 1000 verfügen. Die Hautverhinderungsmittel wirken üblicherweise als Reduktions- oder Komplexierungsmittel und verhindern die frühzeitige Aushärtung der Beschichtungsmasse an der Oberfläche.

Primärtrockner liegen in den erfindungsgemäßen Beschichtungsmassen, sofern Bestandteil derselben, vorzugsweise in Mengen im Bereich von 0,1 bis 4,0 Gew.-% und besonders bevorzugt im Bereich von 0,5 bis 3,0 Gew.-% vor. Sekundärtrockner liegen in den erfindungsgemäßen Beschichtungsmasse, sofern Bestandteil derselben, vorzugsweise in Mengen im Bereich von 0,1 bis 0,8 Gew.-% und besonders bevorzugt im Bereich von vor. Hautverhinderungsmittel liegen in den erfindungsgemäßen Beschichtungsmassen, sofern Bestandteil derselben, vorzugsweise in Mengen im Bereich von 0,1 bis 0,5 Gew.-% vor. Und Rheologiemodifizierungsmittel liegen in den erfindungsgemäßen Beschichtungsmassen, sofern Bestandteil derselben, vorzugsweise in Mengen im Bereich von 0,1 bis 5,0 Gew.-% und besonders bevorzugt im Bereich von 0,4 bis 0,5 Gew.-% vor.

In den erfindungsgemäßen Beschichtungsmassen liegt der Anteil des Lösungsmittels vorzugsweise unterhalb von 10,0 Gew.-% und besonders bevorzugt unterhalb von 5,0 Gew.-%, jeweils bezogen auf das Gesamtgewicht der Beschichtungsmasse.

Besonders geeignete Lösemittel umfassen mindestens einen, insbesondere im Wesentlichen aromatenfreien, aliphatischen Kohlenwasserstoff, vorzugsweise ausgewählt aus der Gruppe bestehend aus, insbesondere entaromatisiertem, Testbenzin, n-Paraffinen, Isoparaffinen, Cycloparaffinen und beliebigen Mischungen hiervon, umfasst oder hieraus besteht. Besonders bevorzugt kommen entaromatisierte aliphatische Kohlenwasserstoffe zum Einsatz

Als aromatenfrei im Sinne der vorliegenden Erfindung sollen solche Lösemittel bzw. Kohlenwasserstoffe verstanden werden, die gemäß der Definition TRGS 900 zur TRGS 900 Gruppe 1 gehören. Gemäß der VdL-Richtlinie Bautenanstrichstoffe (Richtlinie zur Deklaration von Inhaltsstoffen in Bautenlacken, Bautenfarben und verwandten Produkten) VdL-RL 01 (4. Revision) des Verbands der deutschen Lack- und Druckfarbenindustrie e.V. (revidierte Ausgabe November 2013) sollen insbesondere auch solche Lösemittel bzw. aliphatischen Kohlenwasserstoffe aromatenfrei im Sinne der vorliegenden Erfindung verstanden werden, die zu Beschichtungen aus den erfindungsgemäßen Beschichtungsmassen führen, welche einen Aromatengehalt kleiner 1 Gew.-%, bestimmt nach DIN 55683, aufweisen (s.a. 4.2.2. der VdL-RL 01). Ganz bevorzugt sollen im Sinne der vorliegenden Erfindung unter aromatenfrei solche Lösemittel bzw. aliphatischen Kohlenwasserstoffe verstanden werden, die einen Aromatengehalt kleiner 0, 2 Gew.-%, vorzugsweise kleiner 0,1 Gew.-%, besitzen.

Das Additiv wird in bevorzugten Ausgestaltungen ausgewählt aus der Gruppe bestehend aus Mattierungsmitteln, Entschäumern, Lichtschutzmitteln, Radikalfängern, Oberflächenadditiven, insbesondere Silikonoberflächenadditiven, beispielsweise polyethermodifiziertes Polymethylalkylsiloxan Silikonpolyether-Copolymere und/oder oberflächenaktive Polyacrylate, und beliebigen Mischungen dieser Verbindungen.

Als geeignete Lichtschutzmittel kann man sogenannte HALS-Verbindungen (*hindered α-mine light stabilizers*) verwenden. Diese Verbindungen ermöglichen häufig eine sehr gute Wetterstabilität, Lichtschutzmittel können z.B. in einer Menge im Bereich von 0,1 bis 2,0 Gew. %, vorzugsweise im Bereich von 0,2 bis 0,75 Gew. %, jeweils bezogen auf das Gesamtgewicht der Beschichtungsmasse eingesetzt werden.

Als Entschäumer können beispielsweise Polysiloxane eingesetzt werden. Geeignete schaumzerstörende bzw. schaumunterbindende Polysiloxane sind dem Fachmann bekannt.

Als Mattierungsmittel greift man häufig auf Kieselsäure, z.B. Fällungskieselsäure oder nachbehandelte Fällungskieselsäure, und/oder Wachse zurück, wobei Wachse bevorzugt sind. Unter den Wachsen sind wiederum solche mit einer Teilchengröße D90, im Bereich von 3 bis 25 µm, bevorzugt im Bereich von 4 bis 18 µm und besonders bevorzugt im Bereich von 5 bis 15 µm, und/oder über einen D10-Wert im Bereich von 0,5 bis 5 µm, vorzugsweise im Bereich von 1 bis 4 µm, und/oder über einen D50-Wert im Bereich von 2 bis 15 µm, bevorzugt im Bereich von 3 bis 10 µm, jeweils bestimmt mittels Laser-Diffraktionsanalyse nach ISO 13320:2009-10, zurück. Geeignete Wachse liegen regelmäßig auf organischer Basis vor und verfügen dabei bevorzugt über einen Schmelzpunkt im Bereich von 100 °C bis 220 °C und besonders bevorzugt im Bereich von 150 bis 200 °C.

Unter thixotrope Alkydharze sollen im Sinne der vorliegenden Erfindung solche Alkydharze verstanden werden, die aus einer partiellen Umsetzung von Polyamiden aus polymeren Fettsäuren und Polyaminen mit Alkylharzen herrühren. Ferner können auch Polyharnstoffmodifizierte Alkydharze, auch Polyharnstoff-thixotropierte Alkydharze genannt, als thixotrope Alkydharze im Sinne der Erfindung eingesetzt werden. Exemplarisch sei auf geeignete thixotrope Alkydharze verwiesen, wie sie in der EP 922 738 B1 beschrieben sind.

Die der Erfindung zugrunde liegende Aufgabe wird des Weiteren gelöst durch eine auf einem Substrat vorliegende Beschichtung, erhalten oder erhältlich durch Auftragen und Trocknen der erfindungsgemäßen Beschichtungsmasse. Diese Beschichtungsmasse verfügen in vielen zweckmäßigen Ausgestaltungen über eine durchschnittliche Trockenschichtdicke, bestimmt nach DIN EN ISO 2808-2 (in der Fassung von Mai 2007), im Bereich von 25 bis 250 µm, bevorzugt im Bereich von 100 bis 200 µm und besonders bevorzugt im Bereich von 100 bis 150 µm.

Die erfindungsgemäßen Beschichtungen sind insbesondere auch gekennzeichnet durch eine Pigment-Volumen-Konzentration (PVK) im Bereich von 5 bis 40 %, vorzugsweise im Bereich von 10 bis 37,5 % und besonders bevorzugt im Bereich von 15 bis 30 %. Die Ermittlung der Pigment-Volumen-Konzentration von Beschichtungen ist dem Fachmann bekannt. Hierfür kann beispielsweise Rückgriff genommen werden auf die Fachpublikation von A. Goldschmidt und H.-J. Streitberger im BASF Handbuch Lackiertechnik (2002; Vincentz Verlag).

Bei den erfindungsgemäßen Beschichtungen kann es sich zum Beispiel um einen Bautenschutzlack, Holzschutzlack, Metallbeschichtungslack, oder Kunststoffbeschichtungslack sowie gegebenenfalls auch um einen Korrosionsschutzlack, bevorzugt Bautenschutzlack, Holzschutzlack oder Metallbeschichtungslack handeln. Grundsätzlich können mit den erfindungsgemäßen Beschichtungsmassen jegliche Oberflächen beschichtet werden, allerdings mit der Einschränkung, dass diese für die Beschichtung verzinkter Metallflächen regelmäßig keine oder nur eine geringe Eignung besitzen.

Demgemäß kann die erfindungsgemäße Beschichtungsmasse als oder für die Herstellung von Bautenschutz-, Holzschutz-, Metallbeschichtungs-, Kunststoffbeschichtungs-, Industrie-, Maler- oder Maschinenlacken eingesetzt werden, wobei der Einsatz als oder für die Herstellung von Bautenschutzlacken, Holzschutzlacken und/oder Grundierungen bevorzugt ist.

Ferner kann die erfindungsgemäßen Beschichtungsmasse für die Herstellung von Decklackbeschichtungen, Grundierungsbeschichtungen, Grundierungs-/Decklack-1-Topf-Beschichtungen oder von Endbeschichtungen im Innen- und/oder Außenbereich verwendet werden.

Mit der vorliegenden Erfindung geht die überraschende Erkenntnis einher, dass sich lösemittelhaltige Beschichtungsmassen mit einem extrem hohen Feststoffanteil erhalten lassen, die - trotz dieses hohen Feststoffanteils - sich gut verarbeiten lassen und angenehme Applikationseigenschaften zeigen und die überdies zu Beschichtungen führen, die sich durch eine qualitativ hochwertige Optik auszeichnen, beispielsweise keine sogenannten Runzeln aufweisen und auch nicht signifikant zur Vergilbung neigen.

Von Vorteil ist weiterhin, dass die Beschichtungsmassen sehr schnell trocknen, wodurch sich die Bearbeitungszyklen in wesentlich kürzeren Zeiträumen abwickeln lassen. Überraschend wurde ebenfalls gefunden, dass auf Bindemittel zurückgegriffen werden kann, die vollständig oder nahezu vollständig als Festkörper vorliegen, gleichwohl mit einer niedrigen Viskosität ausgestattet sind. Die genannten forderten Eigenschaften stellen sich ebenfalls ein mit solchen Beschichtungsmassen, die frei von organischen Konservierungsmitteln sind. Mit den erfindungsgemäßen Beschichtungsmassen kann folglich eine Zertifizierung "Blauer Engel" gelingen. Unter Umweltschutzaspekten weisen die erfindungsgemäßen Beschichtungsmasse den weiteren Vorteil auf, dass eine Vielzahl der zur Anwendung gelangenden Ausgangsmaterialien aus nachwachsenden Rohstoffen gewonnen werden können. Schließlich hat sich als besonders fort läuft erwiesen, dass die mit den erfindungsgemäßen Beschichtungsmassen erhältlichen Beschichtungen regelmäßig einen sehr geringen Volumenschrumpf zeigen. Hierdurch kann vielfach ein mehrfacher Auftrag eingespart werden. In diesem Zusammenhang ist von Vorteil, dass sich die erfindungsgemäßen lösemittelhaltigen Beschichtungsmassen zudem auch mit relativ großen Schichtdicken Auftragen lassen und das auch Beschichtungen mit großen Schichtdicken gleichmäßig und zügig abtrocknen.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Lösemittelhaltige Beschichtungsmasse für Lackbeschichtungen, insbesondere lösemittelhaltiger Bautenlack, bestehend aus oder enthaltend
a) 35 bis 65 Gew.-%, bevorzugt 55 bis 60 Gew.-%, eines ersten, insbesondere bei Raumtemperatur, oxidativ trocknenden langöligen Alkydharzes und
b) mindestens ein Lösungsmittel sowie
c) gegebenenfalls mindestens ein Additiv,
wobei der Festkörperanteil der Beschichtungsmasse, bezogen auf das Gesamtgewicht der Beschichtungsmasse, oberhalb von 90,0 Gew.-%, bevorzugt im Bereich von oberhalb 90,0 bis 98,0 Gew.-% und besonders bevorzugt im Bereich von 95,0 bis 98,0 Gew.-% liegt, und wobei die die Beschichtungsmasse bildenden Komponenten sich stets zu 100,00 Gew.-% addieren.

2. Beschichtungsmasse nach Anspruch 1, **dadurch gekennzeichnet, dass** das erste oxidativ trocknende langölige Alkydharz über eine Säurezahl verfügt, die nicht oberhalb von 10 mg KOH/g Polymer, bevorzugt nicht oberhalb von 9 mg KOH/g Polymer und besonders bevorzugt nicht oberhalb von 8 mg KOH/g Polymer, jeweils bestimmt gemäß DIN EN ISO 2114:2002-06, liegt, und/oder dass die Viskosität des ersten oxidativ trocknenden langöligen Alkydharzes im Bereich von 700 bis 1100 mPas, ermittelt bei 23°C und einer Scherrate von 250 s⁻¹ liegt, und/oder dass
das erste oxidativ trocknende langölige Alkydharz über einen Ölgehalt von mindestens 70 %, bevorzugt mindestens 75 % und besonders bevorzugt im Bereich von 76 bis 84 %, verfügt.

3. Beschichtungsmasse nach Anspruch 1 oder 2, ferner umfassend einen zweiten, insbesondere bei Raumtemperatur, oxidativ trocknenden langöligen Alkydharz, der sich von dem ersten Alkydharz unterscheidet.

4. Beschichtungsmasse nach Anspruch 3, **dadurch gekennzeichnet, dass** der zweite oxidativ trocknende langölige Alkydharz in der Beschichtungsmasse in einer Menge im Bereich bis maximal 15 Gew.-%, bevorzugt bis maximal 12 Gew.-% und besonders bevorzugt in einer Menge im Bereich von 3 bis 10 Gew.-%, vorliegt.

5. Beschichtungsmasse nach Anspruch 3 oder 4, **dadurch gekennzeichnet, dass** das zweite oxidativ trocknende langöligen Alkydharz über eine Säurezahl verfügt, die nicht oberhalb von 10 mg KOH/g Polymer, bevorzugt nicht oberhalb von 9 mg KOH/g Polymer und besonders bevorzugt nicht oberhalb von 8 mg KOH/g Polymer, jeweils bestimmt gemäß DIN EN ISO 2114:2002-06, liegt, und/oder dass die Viskosität des zweiten oxidativ trocknenden langöligen Alkydharzes nicht oberhalb von 750 mPas, bevorzugt nicht oberhalb von 600 mPas und besonders bevorzugt im Bereich von 300 bis 550 mPas, jeweils ermittelt bei 23°C und einer Scherrate von 250 s⁻¹, liegt, und/oder dass
das zweite oxidativ trocknende langölige Alkydharz über einen Ölgehalt von mindestens 80 %, bevorzugt mindestens 85 % und besonders bevorzugt im Bereich von 86 bis 94 %, verfügt.

6. Beschichtungsmasse nach einem der vorangehenden Ansprüche, **dadurch gekennzeichnet, dass**
der Langölanteil der ersten und/oder zweiten oxidativ trocknenden langöligen Alkydharze auf Linolsäure, Linolensäure und/oder Ölsäure, gegebenenfalls unter Zusatz von Palmitinsäure und/oder Stearinsäure, insbesondere auf Linolsäure, Linolensäure und Ölsäure unter Zusatz von Palmitinsäure und Stearinsäure, basiert.

7. Beschichtungsmasse nach einem der vorangehenden Ansprüche, **dadurch gekennzeichnet, dass**
der Festkörperanteil der ersten und/oder zweiten oxidativ trocknenden langöligen Alkydharze, insbesondere der ersten und zweiten oxidativ trocknenden langöligen Alkydharze, nicht unterhalb von 75 Gewichtsprozent, bevorzugt nicht unterhalb von 90 Gewichtsprozent und besonders bevorzugt nicht unterhalb von 98 Gewichtsprozent, liegt.

8. Beschichtungsmasse nach einem der vorangehenden Ansprüche, insbesondere nach einem der Ansprüche 3 bis 7, **dadurch gekennzeichnet, dass**
diese über einen VOC-Wert von maximal 275 g/L, bevorzugt von maximal 50 g/L und besonders bevorzugt von maximal 30 g/L verfügen, jeweils bestimmt gemäß DIN EN ISO 11890-1 (September 2007).

9. Beschichtungsmasse nach einem der vorangehenden Ansprüche, ferner umfassend
d) mindestens einen Primärtrockner, insbesondere basierend auf Eisen,
e) mindestens einen Sekundärtrockner,
f) mindestens ein Hautverhinderungsmittel und/oder
g) mindestens ein Rheologiemodifizierungsmittel.

10. Beschichtungsmasse nach einem der vorangehenden Ansprüche, ferner umfassend
h) mindestens ein Pigment und/oder Füllstoff und/oder
i) mindestens ein Netz- und/oder Dispergiermittel.

11. Beschichtungsmasse nach einem der vorangehenden Ansprüche, **dadurch gekennzeichnet, dass**
diese im Wesentlichen frei von Primärtrockner und Sekundärtrocknern auf Cobalt-, Barium- und/oder Blei-Basis ist, insbesondere im Wesentlichen frei von Primärtrocknern und Sekundärtrocknern auf Cobalt-Basis.

12. Beschichtungsmasse nach Anspruch 10 oder 11, **dadurch gekennzeichnet, dass** das Netz- und/oder Dispergiermittel i) ausgewählt ist aus der Gruppe bestehend aus einem verzweigkettigen Polyester i1), einem Polyesterblockcopolymer i2), vorzugsweise mit einer Molmasse Mw im Bereich von 60.000 bis 100.000 g/mol, einem polymeren Alkylammoniumsalz i3), einem Polyphosphorsäureester i4) und beliebigen Mischungen hiervon und/oder dass
das Rheologiemodifizierungsmittel g) ausgewählt ist aus der Gruppe bestehend aus Schichtsilikaten ausgewählt aus der Gruppe bestehend aus Bentoniten, modifizierten Schichtsilikaten, insbesondere organisch modifizierten Schichtsilikaten, thioxotropen Alkydharzen und beliebigen Mischungen hiervon.

13. Beschichtungsmasse nach einem der Ansprüche 9 bis 12, enthaltend 0,1 bis 4,0 Gew.-% und bevorzugt 0,5 bis 3,0 Gew.-% an dem Primärtrockner und/oder dem Sekundärtrockner und/oder
0,1 bis 0,8 Gew.-% und bevorzugt 0,1 bis 0,5 Gew.-% an dem Hautverhinderungsmittel und/oder
0,1 bis 5,0 Gew.-% und bevorzugt 0,4 bis 0,5 Gew.-% an dem Rheologiemodifizierungsmittel.

14. Beschichtungsmasse nach einem der vorangehenden Ansprüche, **dadurch gekennzeichnet, dass**
der Anteil des Lösungsmittels unterhalb von 10,0 Gew.-%, bevorzugt unterhalb von 5,0 Gew.-%, bezogen auf das Gesamtgewicht der Beschichtungsmasse, liegt.

15. Beschichtung auf einem Substrat, erhalten oder erhältlich durch Auftragen und Trocknen der Beschichtungsmasse gemäß einem der vorangehenden Ansprüche.

16. Beschichtung nach Anspruch 15, **dadurch gekennzeichnet, dass** diese über eine durchschnittliche Trockenschichtdicke, bestimmt nach DIN EN ISO 2808-2 (Mai 2007), im Bereich von 25 bis 250 µm, bevorzugt im Bereich von 100 bis 200 µm und besonders bevorzugt im Bereich von 100 bis 150 µm verfügt.

17. Beschichtung nach Anspruch 15 oder 16, **dadurch gekennzeichnet, dass** die Pigment-Volumen-Konzentration im Bereich von 5 bis 40 %, vorzugsweise im Bereich von 10 bis 35 % und besonders bevorzugt im Bereich von 15 bis 25 % liegt.

18. Beschichtung nach einem der Ansprüche 15 bis 17, **dadurch gekennzeichnet, dass** diese einen Bautenschutzlack, Korrosionsschutzlack, Holzschutzlack, Metallbeschichtungslack oder Kunststoffbeschichtungslack, bevorzugt Bautenschutzlack, Holzschutzlack oder Metallbeschichtungslack, darstellt.

19. Verwendung der Beschichtungsmasse nach einem der Ansprüche 1 bis 14 als oder für die Herstellung von Bauten-, Korrosionsschutz-, Holzschutz-, Metallbeschichtungs-, Kunststoffbeschichtungs-, Industrie-, Maler- oder Maschinenlacken, insbesondere als oder für die Herstellung von Bautenschutzlacken, Korrosionsschutzlacken, Holzschutzlacken und/oder Grundierungen.

20. Verwendung der Beschichtungsmasse nach einem der Ansprüche 1 bis 14 für die Herstellung von Decklackbeschichtungen, Grundierungsbeschichtungen, Grundierungs-/Decklack-1-Topf-Beschichtungen oder von Endbeschichtungen im Innen-und/oder Außenbereich.

## Claims

1. A solvent-containing coating material for lacquer coatings, in particular a solvent-containing building lacquer, consisting of or containing
a) 35 to 65 wt.%, preferably 55 to 60 wt.%, of a first long-oil alkyd resin that is oxidatively drying, in particular at room temperature, and
b) at least one solvent, and
c) optionally at least one additive,
wherein the solids fraction of the coating material, based on the total weight of the coating material, is above 90.0 wt.%, preferably in the range of above 90.0 to 98.0 wt.%, and particularly preferably in the range of 95.0 to 98.0 wt.%, and wherein the components forming the coating material always add up to 100.00 wt.%.

2. The coating material according to Claim 1, **characterized in that** the first oxidatively drying long-oil alkyd resin has an acid number that is not above 10 mg KOH/g polymer, preferably not above 9 mg KOH/g polymer, and particularly preferably not above 8 mg KOH/g polymer, determined in each case in accordance with DIN EN ISO 2114:2002-06, and/or **in that**
the viscosity of the first oxidatively drying long-oil alkyd resin is in the range of 700 to 1100 mPas, determined at 23°C and a shear rate of 250 s⁻¹, and/or **in that** the first oxidatively drying long-oil alkyd resin has an oil content of at least 70%, preferably at least 75%, and particularly preferably in the range of 76 to 84%.

3. The coating material according to Claim 1 or 2, further comprising a second long-oil alkyd resin that is oxidatively drying, in particular at room temperature, and differs from the first alkyd resin.

4. The coating material according to Claim 3, **characterized in that** the second oxidatively drying long-oil alkyd resin is present in the coating material in a quantity in the range of up to a maximum of 15 wt.%, preferably up to a maximum of 12 wt.%, and particularly preferably in a quantity in the range of 3 to 10 wt.%.

5. The coating material according to Claim 3 or 4, **characterized in that** the second oxidatively drying long-oil alkyd resin has an acid number that is not above 10 mg KOH/g polymer, preferably not above 9 mg KOH/g polymer, and particularly preferably not above 8 mg KOH/g polymer, determined in each case in accordance with DIN EN ISO 2114:2002-06, and/or **in that**
the viscosity of the second oxidatively drying long-oil alkyd resin is not above 750 mPas, preferably not above 600 mPas, and particularly preferably is in the range of 300 to 550 mPa·s, determined in each case at 23°C and a shear rate of 250 s⁻¹, and/or **in that**
the second oxidatively drying long-oil alkyd resin has an oil content of at least 80%, preferably at least 85%, and particularly preferably in the range of 86 to 94%.

6. The coating material according to any one of the preceding claims, **characterized in that**
the long-oil fraction of the first and/or second oxidatively drying long-oil alkyd resins is based on linoleic acid, linolenic acid, and/or oleic acid, optionally with the addition of palmitic acid and/or stearic acid, in particular is based on linoleic acid, linolenic acid, and oleic acid, with the addition of palmitic acid and stearic acid.

7. The coating material according to any one of the preceding claims, **characterized in that**
the solids fraction of the first and/or second oxidatively drying long-oil alkyd resins, in particular the first and second oxidatively drying long-oil alkyd resins, is not below 75 wt.%, preferably not below 90 wt.%, and particularly preferably not below 98 wt.%.

8. The coating material according to any one of the preceding claims, in particular according to any one of Claims 3 to 7, **characterized in that**
it has a VOC value of at most 275 g/l, preferably of at most 50 g/l, and particularly preferably of at most 30 g/l, determined in each case in accordance with DIN EN ISO 11890-1 (September 2007).

9. The coating material according to any one of the preceding claims, further comprising
d) at least one primary drier, in particular based on iron,
e) at least one secondary drier,
f) at least one skin prevention agent, and/or
g) at least one rheology modifier.

10. The coating material according to any one of the preceding claims, further comprising
h) at least one pigment and/or filler, and/or
i) at least one wetting agent and/or dispersant.

11. The coating material according to any one of the preceding claims, **characterized in that**
it is substantially free of primary driers and secondary driers based on cobalt, barium, and/or lead, in particular substantially free of primary driers and secondary driers based on cobalt.

12. The coating material according to Claim 10 or 11, **characterized in that** the wetting agent and/or dispersant i) is selected from the group consisting of a branched-chain polyester i1), a polyester block copolymer i2), preferably having a molar mass Mw in the range of 60,000 to 100,000 g/mol, a polymeric alkyl ammonium salt i3), a polyphosphoric acid ester i4), and any mixtures thereof, and/or in that
the rheology modifier g) is selected from the group consisting of phyllosilicates selected from the group consisting of bentonites, modified phyllosilicates, in particular organically modified phyllosilicates, thixotropic alkyd resins, and any mixtures thereof.

13. The coating material according to any one of Claims 9 to 12, containing 0.1 to 4.0 wt.% and preferably 0.5 to 3.0 wt.% of the primary drier and/or the secondary drier, and/or
0.1 to 0.8 wt.% and preferably 0.1 to 0.5 wt.% of the skin prevention agent, and/or
0.1 to 5.0 wt.% and preferably 0.4 to 0.5 wt.% of the rheology modifier.

14. The coating material according to any one of the preceding claims, **characterized in that**
the fraction of the solvent is below 10.0 wt.%, preferably below 5.0 wt.%, based on the total weight of the coating material.

15. A coating on a substrate, obtained or obtainable by applying and drying the coating material according to any one of the preceding claims.

16. The coating according to Claim 15, **characterized in that**
it has an average dry-film thickness, determined in accordance with DIN EN ISO 2808-2 (May 2007), in the range of 25 to 250 µm, preferably in the range of 100 to 200 µm, and particularly preferably in the range of 100 to 150 µm.

17. The coating according to Claim 15 or 16, **characterized in that** the pigment volume concentration is in the range of 5 to 40%, preferably in the range of 10 to 35%, and particularly preferably in the range of 15 to 25%.

18. The coating according to any one of Claims 15 to 17, **characterized in that** it is a protective building lacquer, an anti-corrosion lacquer, a wood-protection lacquer, a metal coating lacquer, or a plastics coating lacquer, preferably a protective building lacquer, a wood-protection lacquer, or a metal coating lacquer.

19. Use of the coating material according to any one of Claims 1 to 14 as or for the production of building lacquers, anti-corrosion lacquers, wood-protection lacquers, metal coating lacquers, plastics coating lacquers, industrial lacquers, professional lacquers, or machine lacquers, in particular as or for the production of protective building lacquers, anti-corrosion lacquers, wood-protection lacquers, and/or primers.

20. Use of the coating material according to any one of Claims 1 to 14 for the production of top lacquers coats, primer coats, one-pot primer/top lacquers coat, or final coats for interiors and/or exteriors.

## Revendications

1. Matière de revêtement contenant du solvant pour des revêtement de laque, en particulier de laque pour constructions contenant du solvant, se composant de ou contenant
a) de 35 à 65 % massique, de préférence de 55 à 60 % massique, d'une première résine alkyde longue en huile à séchage oxydatif, en particulier à température ambiante, et
b) au moins un solvant, ainsi que,
c) le cas échéant, au moins un additif,
la part de matières solides de la matière de revêtement étant supérieure à 90,0 % massique, de préférence dans la plage de plus de 90,0 à 98,0 % massique, et en particulier de préférence dans la plage de 95,0 à 98,0 % massique, rapportée au poids total de la matière de revêtement, et la somme des composants formant la matière de revêtement étant toujours égale à 100,00 % massique.

2. Matière de revêtement selon la revendication 1, **caractérisée en ce que** la première résine alkyde longue en huile à séchage oxydatif a un indice d'acide n'étant pas supérieur à 10 mg KOH/g polymère, de préférence n'étant pas supérieur à 9 mg KOH/g polymère et en particulier de préférence n'étant pas supérieur à 8 mg KOH/g polymère, déterminé à chaque fois en conformité avec la norme DIN EN ISO 2114:2002-06, et/ou **en ce que**
la viscosité de la première résine longue en huile à séchage oxydatif se trouve dans la plage de 700 à 1100 mPas, déterminée à 23 °C et à un taux de cisaillement de 250 s⁻¹, et/ou **en ce que**
la première résine alkyde longue en huile à séchage oxydatif a une teneur en huile de 70 % au minimum, de préférence de 75 % au minimum et en particulier de préférence dans la plage de 76 à 84 %.

3. Matière de revêtement selon la revendication 1 ou 2, comprenant en outre une deuxième résine alkyde longue en huile à séchage oxydatif, en particulier à température ambiante, laquelle est distincte de la première résine alkyde.

4. Matière de revêtement selon la revendication 3, **caractérisée en ce que** la deuxième résine alkyde longue en huile à séchage oxydatif est présente dans la matière de revêtement avec une part dans la plage de 15 % massique au maximum, de préférence de 12 % massique au maximum, et en particulier de préférence avec une part dans la plage de 3 à 10 % massique.

5. Matière de revêtement selon la revendication 3 ou 4, **caractérisée en ce que** la deuxième résine alkyde longue en huile à séchage oxydatif a un indice d'acide n'étant pas supérieur à 10 mg KOH/g polymère, de préférence n'étant pas supérieur à 9 mg KOH/g polymère et en particulier de préférence n'étant pas supérieur à 8 mg KOH/g polymère, déterminé à chaque fois en conformité avec la norme DIN EN ISO 2114:2002-06, et/ou **en ce que**
la viscosité de la deuxième résine alkyde longue en huile à séchage oxydatif n'est pas supérieure à 750 mPas, de préférence n'est pas supérieure à 600 mPas et en particulier de préférence est dans la plage de 300 à 550 mPas, déterminée à chaque fois à 23 °C et à un taux de cisaillement de 250 s⁻¹, et/ou **en ce que**
la deuxième résine alkyde longue en huile à séchage oxydatif a une teneur en huile de 80 % au minimum, de préférence de 85 % au minimum et en particulier de préférence dans la plage de 86 à 94 %.

6. Matière de revêtement selon l'une des revendications précédentes, **caractérisée en ce que**
la part longue en huile des premières et/ou des deuxièmes résines alkydes longues en huile à séchage oxydatif est à base d'acide linoléique, d'acide linolénique et/ou d'acide oléique, le cas échéant par addition d'acide palmitique et/ou d'acide stéarique, en particulier à base d'acide linoléique, d'acide linolénique et d'acide oléique, par addition d'acide palmitique et d'acide stéarique.

7. Matière de revêtement selon l'une des revendications précédentes, **caractérisée en ce que**
la part de matières solides des premières et/ou des deuxièmes résines alkydes longues en huile à séchage oxydatif, en particulier des premières et des deuxièmes résines alkydes longues en huile à séchage oxydatif, n'est pas inférieure à 75 pour cent massique, de préférence n'est pas inférieure à 90 pour cent massique et en particulier de préférence n'est pas inférieure à 98 pour cent massique.

8. Matière de revêtement selon l'une des revendications précédentes, en particulier selon l'une des revendications 3 à 7, **caractérisée en ce que**
ladite matière de revêtement a une teneur en COV de 275 g/l au maximum, de préférence de 50 g/l au maximum et en particulier de préférence de 30 g/l au maximum, déterminée à chaque fois en conformité avec la norme DIN EN ISO 11890-1 (septembre 2007).

9. Matière de revêtement selon l'une des revendications précédentes, comprenant en outre
d) au moins un siccatif primaire, en particulier à base de fer,
e) au moins un siccatif secondaire,
f) au moins un agent anti-peau et/ou
g) au moins un agent de modification de rhéologie.

10. Matière de revêtement selon l'une des revendications précédentes, comprenant en outre
h) au moins un pigment et/ou une charge et/ou
i) au moins un agent mouillant et/ou un agent dispersant.

11. Matière de revêtement selon l'une des revendications précédentes, **caractérisée en ce que**
ladite matière de revêtement est essentiellement exempte de siccatifs primaires et de siccatifs secondaires à base de cobalt, de baryum et/ou de plomb, en particulier essentiellement exempte de siccatifs primaires et de siccatifs secondaires à base de cobalt.

12. Matière de revêtement selon la revendication 10 ou 11, **caractérisée en ce que** l'agent mouillant et/ou l'agent dispersant i) est sélectionné parmi le groupe se composant d'un polyester à chaîne ramifiée i1), d'un copolymère de polyester séquencé i2), de préférence avec une masse molaire Mw dans la plage de 60 000 à 100 000 g/mol, d'un sel d'alkylammonium polymère i3), d'un ester d'acide polyphosphorique i4) et de mélanges quelconques de ceux-ci et/ou **en ce que** l'agent de modification de rhéologie g) est sélectionné parmi le groupe se composant de phyllosilicates sélectionnés parmi le groupe se composant de bentonites, de phyllosilicates modifiés, en particulier de phyllosilicates organiquement modifiés, de résines alkydes thixotropes et de mélanges quelconques de ceux-ci.

13. Matière de revêtement selon l'une des revendications 9 à 12, contenant de 0,1 à 4,0 % massique et de préférence de 0,5 à 3,0 % massique du siccatif primaire et/ou du siccatif secondaire et/ou
de 0,1 à 0,8 % massique et de préférence de 0,1 à 0,5 % massique de l'agent anti-peau et/ou
de 0,1 à 5,0 % massique et de préférence de 0,4 à 0,5 % massique de l'agent de modification de rhéologie.

14. Matière de revêtement selon l'une des revendications précédentes, **caractérisée en ce que**
la part du solvant est inférieure à 10,0 % massique, de préférence inférieure à 5,0 % massique, rapportée au poids total de la matière revêtement.

15. Revêtement sur un substrat, obtenu ou pouvant être obtenu par application et séchage de la matière de revêtement selon l'une des revendications précédentes.

16. Revêtement selon la revendication 15, **caractérisé en ce que**
ledit revêtement a une épaisseur de couche sèche moyenne, déterminée en conformité avec la norme DIN EN ISO 2808-2 (mai 2007), dans la plage de 25 à 250 µm, de préférence dans la plage de 100 à 200 µm et en particulier de préférence dans la plage de 100 à 150 µm.

17. Revêtement selon la revendication 15 ou 16, **caractérisé en ce que** la concentration pigment-volume se trouve dans la plage de 5 à 40 %, de préférence dans la plage de 10 à 35 % et en particulier de préférence dans la plage de 15 à 25 %.

18. Revêtement selon l'une des revendications 15 à 17, **caractérisé en ce que** ledit revêtement représente une laque de protection des constructions, une laque de protection contre la corrosion, une laque de protection du bois, une laque de revêtement de métal ou une laque de revêtement de plastique, de préférence une laque de protection des constructions, une laque de protection du bois ou une laque de revêtement de métal.

19. Utilisation de la matière de revêtement selon l'une des revendications 1 à 14 comme ou pour la fabrication de laques pour constructions, de protection contre la corrosion, de protection du bois, de revêtement de métal, de revêtement de plastique, de laques industrielles, de peintures ou de peintures pour machines, en particulier comme ou pour la fabrication de laques de protection des constructions, laques de protection contre la corrosion, laques de protection du bois et/ou d'apprêts.

20. Utilisation de la matière de revêtement selon l'une des revendications 1 à 14 pour la fabrication de revêtements de laques de couverture, revêtements d'apprêts, revêtements apprêt/laque de couverture 2 en 1 en pot ou revêtements de finition en intérieur et/ou en extérieur.
